# EUROPÄISCHE PATENTSCHRIFT

(11) **EP 2 955 295 B1**
(45) Veröffentlichungstag und Bekanntmachung des Hinweises auf die Patenterteilung: **28.02.2018**
(21) Anmeldenummer: 14002024.9
(22) Anmeldetag: 12.06.2014
(51) Int. Cl.: E04F 15/02, B33Y 80/00

(54) **Verfahren zum Herstellen eines Paneels**
Method for manufacturing a panel
Procédé de fabrication d'un panneau

(43) Veröffentlichungstag der Anmeldung: 16.12.2015
(73) Patentinhaber: Flooring Technologies Ltd., Kalkara SCM 1001 (MT)
(72) Erfinder: Hecht, Hendrik, DE - 16816 Buskow (DE); Kalwa, Norbert, DE - 32805 Horn-Bad Meinberg (DE)
(74) Vertreter: Friedrich, Andreas

(56) Entgegenhaltungen:
- WO-A1-02/060691
- WO-A1-2014/011110
- DE-U1-202011 109 396
- US-A1- 2014 017 452

## Beschreibung

Die Erfindung betrifft ein Verfahren zum Herstellen eines Paneels, insbesondere eines Fußbodenpaneels, das eine Oberseite, eine der Oberseite gegenüberliegende Unterseite und wenigstens eine Seitenfläche, an der wenigstens ein Verriegelungselement angeordnet ist, aufweist.

Fußbodenpaneele in Form eines Laminatfußbodens bilden einen der weltweit am weitesten verbreiteten Bodenbeläge. Während ein derartiger Laminatfußboden ursprünglich aus einer Vielzahl von einzelnen Paneelen bestand, die miteinander verleimt werden mussten, hat sich im Stand der Technik die leimlose Verlegung beispielsweise unter dem Begriff "Klicklaminat" durchgesetzt. Einzelne Paneele, insbesondere Fußbodenpaneele aber auch Paneele beispielsweise für Decken oder Wandverkleidungen, verfügen dabei über eine Oberseite, die zumeinst mit einem Dekor versehen ist. An der Unterseite ist ein Verwerfungen des Paneels entgegenwirkender Gegenzug aufgebracht, und es können weitere Funktionsschichten, wie beispielsweise Trittschalldämmungen, aufgebracht werden. Die Seitenflächen werden in der Regel mit Verriegelungselementen ausgestattet, die so ausgebildet sind, dass zwei identische Paneele miteinander verbunden werden können. Eine Verriegelung der beiden Paneele in einer Bewegungsrichtung bedeutet dabei, dass eine Bewegung der beiden Paneele relativ zueinander entlang dieser Richtung aufgrund der Ausgestaltung der Verriegelungselemente nicht möglich ist. Die Festigkeit und Stabilität eines beispielsweise aus Fußbodenpaneelen zusammengesetzten Fußbodens hängt dabei maßgeblich von der Festigkeit und Stabilität der Verriegelungselemente ab, da diese einen Großteil der auf die einzelnen Fußbodenpaneele wirkenden Belastungen aufnehmen. Dies gilt insbesondere, wenn die einzelnen Paneele auf einem unebenen Untergrund verlegt werden.

Paneele und insbesondere Fußbodenpaneele bestehen in der Regel aus einem Kern, der oftmals aus einer Holzwerkstoffplatte, beispielsweise einer hochdichten Faserplatte (HDF) oder einer mitteldichten Faserplatte (MDF) besteht. Auch andere Holzwerkstoffplatten und Werkstoffe sind als Kern bereits verwendet worden. Auf der Oberseite werden Beschichtungen aufgebracht, die einerseits das optische Erscheinungsbild der Paneele und andererseits Eigenschaften der insbesondere bei Fußbodenpaneelen stark belasteten Oberseite bestimmen. Dies können die Abriebfestigkeit erhöhende Schichten oder andere Schutzschichten sein. Auf der Unterseite wird, wie bereits dargelegt, der Gegenzug und gegebenenfalls eine Trittschalldämmung aufgebracht. Die Verriegelungselemente werden jedoch aus dem Kernmaterial des Paneels gefertigt und oftmals aus den Seitenflächen einer fertigen Platte herausgefräst. Um die Qualitätskriterien für leimlose Profile, beispielsweise die Festigkeit oder die Auszugsfestigkeit, zu erfüllen, muss das Trägermaterial beispielsweise eine relativ hohe Rohdichte besitzen, um anspruchsvolle und gegebenenfalls komplizierte Profile der Verriegelungselemente überhaupt erstellen zu können. Dies hat zur Folge, dass insbesondere Holzwerkstoffplatten mit einem hohen Leimanteil hergestellt werden müssen, wodurch die Platten selbst schwer und die Kosten für das Produkt unnötig hoch sind. Zudem bedeutet eine hohe Rohdichte und ein hoher Leimanteil, dass der Kern, beispielsweise eine HDF-Platte relativ starr und unelastisch wird, was für eine Vielzahl leimloser Profile ungünstig ist. Während im Bereich der Verriegelungselemente diese erhöhte Festigkeit durchaus Vorteile hat, wird entlang der Fläche des aus den Paneelen verlegten Fußbodens eher eine gewisse Elastizität gewünscht.

Versuche, auf andere Trägermaterialien für den Kern des Paneels zu wechseln sind im Stand der Technik durchaus unternommen worden. So wurden Versuche mit Platten unternommen, deren Kern einen mehr oder weniger hohen Kunststoffanteil aufweist und aus einem so genannten WPC-Material (WPC: wood plastic composite) bestehen. Eine Beschichtung solcher Platten ist allerdings nicht ohne weiteres möglich. Dadurch werden die Kosten jedoch weiter erhöht. Zudem stehen Platten aus derartigen Materialien nicht in der benötigen Menge oder den benötigten Formen zur Verfügung.

Unabhängig davon welches Material als Trägermaterial für das Paneel verwendet wird, werden die Profile in der Regel durch Sägen oder Fräsen erzeugt, so dass bestimmte Profilformen der Verriegelungselemente, beispielsweise mit komplizierten oder ineinander eingreifende Hinterschneidungen, allein aus diesem Grund nicht herstellbar sind. Dies führt dazu, dass höherwertige Profile für Verriegelungselemente, die zu besseren Auszugswerten oder weniger Materialverbrauch führten, technisch nicht hergestellt werden können.

Aus der WO 02/060691 A1 ist ein Verfahren zum Herstellen derartiger Verriegelungselemente bekannt, bei dem zunächst eine Grundform, beispielsweise eine einfache Nut, in eine Seitenfläche des Paneels eingebracht wird. Anschließend wird ein zweites Material auf diese so geschaffene Grundform aufgebracht, bevor beispielsweise mittels Räumwerkzeugen die gewünschte Form der Verriegelungselemente eingebracht wird.

Die DE 20 2011 109 396 U1 offenbart plattenförmige Elemente zum Verkleiden von Flächen, bei denen zwischen den Elementen Dichtungen vorhanden sein sollen, die insbesondere gegen Feuchtigkeit schützen. Diese verfügen über Verriegelungselemente und bestehen aus einem Gummi oder entsprechenden Kunststoff und werden beispielsweise angegossen oder angespritzt.

Aus der US 2014/0017452 A1 und der WO 2014/011110 A1 ist ein Verfahren bekannt, bei dem auf die Oberfläche einer Holzwerkstoffplatte eine dekorative Schicht aufgedruckt wird, die anschließend mit einer Schutzschicht versehen wird, die beispielsweise 0,1 bis 0,2 mm dick ist und über einen Digitaldrucker aufgebracht werden kann.

Der Erfindung liegt daher die Aufgabe zugrunde, ein Verfahren vorzuschlagen, mit dem die Nachteile aus dem Stand der Technik behoben werden.
Die Erfindung löst die gestellte Aufgabe durch ein Verfahren zum Herstellen eines Paneels, insbesondere eines Fußbodenpaneels, das eine Oberseite, eine der Oberseite gegenüberliegende Unterseite und wenigstens eine Seitenfläche, an der wenigstens ein Verriegelungselement angeordnet ist, aufweist, wobei sich das Verfahren dadurch auszeichnet, dass das wenigstens eine Verriegelungselement zumindest teilweise mittels eines 3D-Druckers auf die Seitenfläche aufgedruckt wird.
Da das Verriegelungselement zumindest teilweise auf die Seitenfläche aufgedruckt wird, kommt es hier zu einer ausreichend festen und stabilen Verbindung zwischen beispielsweise dem Kernmaterial des Paneels und dem aufgedruckten Verriegelungselement. Gleichzeitig kann für das Verriegelungselement ein Material gewählt werden, das nicht gleichzeitig das Material des Kerns des Paneels ist. Auf diese Weise ist es möglich, das Kernmaterial des Paneels auf die geforderten Eigenschaften hin zu optimieren und gleichzeitig Verriegelungselemente bereitzustellen, die andere Eigenschaften aufweisen und auf die Bedürfnisse bei Verriegelungselementen optimiert sind.
Bei dem erfindungsgemäßen Verfahren werden die Verriegelungselemente folglich aufgebaut. Dies geschieht bei 3D-Druckern in der Regel in Form einer Vielzahl dünner Schichten des aufgebrachten Materials. Es ist daher nicht nötig, die Verriegelungselemente, wie dies im Stand der Technik bekannt ist, aus dem eigentlichen Paneel beziehungsweise dessen Kernmaterial herauszusägen oder herauszufräsen. Die damit verbundenen Einschränkungen der möglichen Strukturen, Richtungen und Werkzeuge sind beim erfindungsgemäßen Verfahren nicht mehr vorhanden. Durch das Aufdrucken der Verriegelungselemente in gegebenenfalls einer Vielzahl dünner Schichten lassen sich auch komplizierteste Profile für die einzelnen Verriegelungselemente realisieren, so dass neben dem für die Anforderungen von Verriegelungselementen optimierten Material auch beispielsweise bezüglich der Auszugfestigkeit optimierte oder verbesserte Profile für die einzelnen Verriegelungselemente verwendet werden können.

In einer bevorzugten Ausgestaltung verfügt das Paneel, insbesondere das Fußbodenpaneel, folglich über einen Kern beispielsweise aus einer leichten Holzwerkstoffplatte. Bei dieser ist gegenüber den bisher verwendeten dichten oder hochdichten Faserplatten der Leimanteil reduziert, wodurch neben dem Gewicht auch die Herstellungskosten reduziert werden können. Diese Paneele sind für den Endanwender folglich einfacher und leichter zu handhaben, sind leichter zu transportieren und weisen bessere Eigenschaften aufgrund der gegebenenfalls höheren Elastizität auf.
Vorteilhafterweise werden an wenigstens zwei aneinander gegenüberliegenden Seitenflächen zueinander korrespondierende Verriegelungselemente jeweils wenigstens teilweise mittels eines 3D-Druckers auf der jeweiligen Seitenfläche aufgedruckt.

Unabhängig davon, auf wievielen Seitenflächen Verriegelungselemente mit dem 3D-Drucker aufgedruckt werden, können die Verriegelungselemente natürlich auch vollständig durch den 3D-Drucker aufgedruckt werden. Insbesondere, falls an gegenüberliegenden Seitenflächen die Verriegelungselemente mit dem 3D-Drucker aufgedruckt werden, ist es möglich, die einzelnen Profile besonders genau aufeinander abzustimmen. Es ist nicht mehr nötig, für unterschiedliche Profile der einzelnen Verriegelungselemente unterschiedliche Werkzeuge vorzuhalten, die möglichst exakt in die jeweilige Werkzeugmaschine eingesetzt und insbesondere möglichst exakt relativ zum eigentlichen Paneel ausgerichtet werden müssen. Vielmehr ist es beispielsweise möglich, die Position des Paneels zu erfassen und beispielsweise einen Druckkopf des 3D-Drucker anhand dieser erfassten Position der Seitenfläche des Paneels auszurichten. Auch dadurch wird das Herstellungsverfahren beschleunigt und die Herstellungskosten werden gesenkt.

Vorzugsweise sind die beiden korrespondierenden Verriegelungselemente ausgebildet, zwei identische Paneele, insbesondere Fußbodenpaneele, miteinander zu verbinden und in wenigstens eine, bevorzugte wenigstens zwei Raumrichtungen relativ zueinander zu verriegeln. Derartige Profile sind aus dem Stand der Technik bereits bekannt. Die Verriegelung entlang einer Richtung bedeutet, dass eine Bewegung der beiden Paneele relativ zueinander in dieser Richtung nicht mehr möglich ist. Aus dem Stand der Technik sind beispielsweise Profile für Verriegelungselemente bekannt, bei denen die einzelnen Paneele beispielsweise in einer Richtung senkrecht zur Oberseite der unterschiedlichen Paneele und in einer Richtung senkrecht zur Seitenfläche der Paneele, entlang derer die beiden Paneele miteinander verbunden sind, nicht mehr verschoben werden können. Eine Verschiebung der beiden Paneele relativ zueinander entlang der Seitenfläche ist jedoch weiterhin möglich.

Als vorteilhaft hat sich herausgestellt, wenn vor dem Aufdrucken eine Vorprofilierung in die Seitenfläche eingebracht wird. Diese kann vorteilhafterweise in Form einer Nut, einer Feder und/oder einem modifizierten Falz vorhanden sein. Dadurch kann der Materialaufwand für den 3D-Druck reduziert werden, was zu einer weiteren Reduzierung der Herstellungskosten und zu einer Beschleunigung des Verfahrens führt. Insbesondere für den Fall, dass die Verriegelungsprofile über massive Anteile verfügen, können diese aus einem Material des Paneels, beispielsweise des Kerns, hergestellt werden. Da 3D-Drucker das aufzubringende Material in Form einer Vielzahl dünner Schichten aufbringen, ist der Herstellungsaufwand für derart massive Bauteile oder Teile davon mittels des Druckers relativ hoch.

Werden die Profilierungen in die Seitenfläche eingebracht, können diese sehr einfache Formen, beispielsweise eine einfache Nut oder eine einfache Feder, beinhalten. Diese sind mittels Standardfräs- oder -sägewerkzeugen kostengünstig, schnell und genau herstellbar.

Vorteilhafterweise wird zum Aufdrucken des wenigstens einen Verriegelungselementes wenigstens ein thermoplastischer Kunststoff und/oder wenigstens ein strahlenhärtbarer Lack verwendet. So kann der 3D-Drucker beispielsweise nach dem Fused Deposition Modelling-Verfahren funktionieren, bei dem aufgeschmolzene Thermoplaste schichtweise aufgetragen werden. Alternativ dazu kann auch ein 3D-Drucker nach dem Multi Jet Modelling-Verfahren verwendet werden, bei dem mit härtbaren Lacken, die beispielsweise durch UV-Strahlung oder Elektronenstrahlen gehärtet werden können, gearbeitet wird. Unabhängig von der Art des Materials können verschiedenste Eigenschaften durch Variationen der Vorprodukte angepasst werden.

Vorzugsweise wird vor dem Aufdrucken des Materials mit dem 3D-Drucker ein Primer oder eine Grundierung auf die Seitenfläche aufgebracht, um eine bessere Haftung des aufzubringenden Materials zu gewährleisten.

In einer bevorzugten Ausgestaltung des Verfahrens wird die gesamte Seitenfläche mittels des 3D-Druckers bedruckt. Auf diese Weise ist es besonders einfach möglich, beispielsweise die Trägerplatte oder den Kern des Paneels gegen das Eindringen von Wasser zu versiegeln, so dass beispielsweise auch Fußbodenpaneele für Feuchträume, beispielsweise Badezimmer, herstellbar sind. Da dies im gleichen Arbeitsschritt wie das Aufbringen der Verriegelungselemente geschieht, ist anders als bei Verfahren aus dem Stand der Technik, in denen die Versiegelung einen separaten Arbeitsschritt bedeutet, das Verfahren gemäß der vorliegenden Erfindung weiterhin in ökonomischer sinnvoller Weise durchzuführen.

Vorzugsweise wird die Seitenfläche des Paneels mittels des 3D-Druckers wenigstens teilweise entlang wenigstens einer Seitenkante der Seitenfläche bedruckt. Diese wenigstens eine Seitenkante ist dabei vorteilhafterweise die Kante, an der die Seitenfläche mit der Oberseite des Paneels zusammentrifft. Auf diese Weise lassen sich die durch den 3D-Drucker aufzubringenden Materialien auch zu dekorativen Zwecken an der Oberseite des Paneels verwenden. Dazu ist es von Vorteil, wenn die Seitenfläche vollständig wenigstens entlang dieser Seitenkante bedruckt wird. Dies kann jedoch mit unterschiedlichen Materialien geschehen, sodass durch den so zu erreichenden Materialmix entlang dieser Seitenkante dekorative Effekte hervorgerufen werden können.

Alternativ oder zusätzlich dazu kann die Seitenfläche auch entlang der gegenüberliegenden Seitekante wenigstens teilweise, vorteilhafterweise jedoch vollständig bedruckt werden. An dieser gegenüberliegenden Seitenkante stoßen folglich die Seitenfläche des Paneels und die Unterseite des Paneels aneinander.
Als vorteilhaft hat sich herausgestellt, wenn ein Teil des mittels des 3D-Druckers aufgebrachten Materials einen Teil der Oberseite des Paneels bildet. In diesem Fall wird beispielsweise an der Kante, an der die Seitenfläche mit der Oberseite zusammentrifft, wenigstens eine Schicht eines Materials mit dem 3D-Drucker aufgetragen. Im verlegten Zustand, in dem zwei Paneele miteinander verbunden sind, ist dieses Material daher sichtbar und kann für dekorative und ästhetische Zwecke verwendet werden. Da es sich bei dem mit dem 3D-Drucker aufgebrachten Material in der Regel um einen anderen Werkstoff handelt, als er für den Rest der Oberseite des Paneels verwendet wird, lassen sich eine Vielzahl unterschiedlicher dekorativer Effekte erzielen. So ist beispielsweise auch die Erzeugung von Oberflächenstrukturen in dem Bereich der Oberseite, der durch das Material, das mit dem 3D-Drucker aufgebracht wird, gebildet wird, leicht möglich. Auch große und insbesondere tiefe Strukturen lassen sich mittels des 3D-Druckers einfach erzeugen, so dass beispielsweise Fliesenfugen oder Fugen zwischen Steinplatten besonders einfach und realistisch nachgebildet werden können. Durch die für den 3D-Druck verwendeten Materialien können außerdem auch andere Funktionalitäten wie z.B. die elektrische Leitfähigkeit, eine Informationsleitung oder eine Lichtleitung erzeugt werden.

Vorteilhafterweise ist dabei der Teil des aufgedruckten Materials, der den Teil der Oberseite des Paneels bildet, kein Verriegelungselement, sondern dient insbesondere ausschließlich dekorativen Zwecken.

In einem bevorzugten Ausführungsbeispiel des Verfahrens weist das aufgedruckte Verriegelungselement mehrere, insbesondere zwei, unterschiedliche Materialien auf, die mit dem 3D-Drucker aufgedruckt werden. Dabei können unterschiedliche 3D-Drucker oder ein 3D-Drucker mit unterschiedlichen Druckköpfen verwendet werden. Prinzipiell ist es auch möglich, den gleichen Druckkopf eines 3D-Druckers für unterschiedliche Materialien zu verwenden.

Die Verwendung verschiedener Materialien mit unterschiedlichen Festigkeits-, Elastizitäts- und Stabilitätseigenschaften vergrößert die Flexibilität des Verfahrens und die Vielfalt der möglichen Verriegelungselemente.

So kann beispielsweise ein Anteil des Verriegelungselementes elastischer ausgebildet sein als ein benachbarter Anteil, so dass beispielsweise beim Verbinden der Paneele das Verriegelungselement an der Stelle zusammengedrückt werden kann, an der das Material mit der höheren Elastizität vorliegt. Nachdem die einzelnen Paneele in ihre endgültigen Positionen gebracht wurden, kann das so zusammengedrückte Verriegelungselement entspannen und beispielsweise in eine dafür vorgesehene Hinterschneidung einschnappen. Anders als bei Verriegelungselementen aus dem Stand der Technik, die vollständig aus dem gleichen Material bestehen, ist es auf diese Weise möglich, die besonders belasteten Bereiche der Verriegelungselemente besonders elastisch auszubilden und somit ein Abbrechen zu vermeiden.

Vorzugsweise wird das Paneel mit der durch den 3D-Drucker zu bedruckenden Seitenfläche nach oben angeordnet. Auf diese Weise kann das durch den Drucker aufgebrachte Material der Schwerkraft folgend aufgebracht werden und ein Zerfließen oder Zerschmieren im noch nicht ausgehärteten Zustand wird weitestgehend oder sogar vollständig verhindert. Werden unterschiedliche Seitenflächen mit wenigstens einem 3D-Drucker beschichtet, ist es von Vorteil, die jeweils zu bedruckende Seitenfläche nach oben auszurichten und somit das Paneel zwischen einzelnen Druckvorgängen auf den unterschiedlichen Seitenflächen zu drehen.

Beschrieben wird zudem eine Vorrichtung zum Durchführen eines hier beschriebenen Verfahrens, die wenigstens einen 3D-Drucker zum Aufdrucken wenigstens eines Teils des wenigstens einen Verriegelungselementes aufweist. Vorteilhafterweise verfügt der wenigstens eine 3D-Drucker über wenigstens zwei Druckköpfe, durch die unterschiedliche Materialien aufgedruckt werden können. Derartige 3D-Drucker sind aus dem Stand der Technik prinzipiell bekannt. Vorzugsweise verfügt die Vorrichtung zudem über eine Profilierungseinrichtung zum Einbringen einer Profilierung in wenigstens eine Seitenfläche eines Paneels. Auf diese Weise lässt sich zunächst die Profilierung einbringen, wobei die unterschiedlichen Anteile des so eingebrachten Profils anschließend mit dem Teil der Verriegelungselemente bedruckt werden können, die durch den 3D-Drucker aufgebracht werden.

Die Erfindung löst die gestellte Aufgabe zudem durch ein Paneel, insbesondere ein Fußbodenpaneel, das durch eines der hier beschriebenen Verfahren hergestellt ist.

Mit Hilfe der beiliegenden Figuren werden nachfolgend Ausführungsbeispiele der vorliegenden Erfindung näher erläutert. Es zeigt
- Figuren 1a bis 1e: - die schematische Darstellung eines Teils eines Paneels nach unterschiedlichen Verfahrensschritten,
- Figur 2: - die schematische Darstellung eines Verbindungsanteils zwischen zwei Paneelen,
- Figur 3: - eine weitere schematische Darstellung zweier miteinander verbundenen Paneele,
- Figur 4: - unterschiedliche Stadien während des Verbindens zweier Paneele,
- Figur 5: - die schematische Darstellung eines Teils eines Paneels,
- Figur 6a und 6b: - zwei weitere Ausführungsformen eines Paneels,
- Figur 7: - eine weitere Variante einer Ausführungsform eines Paneels.

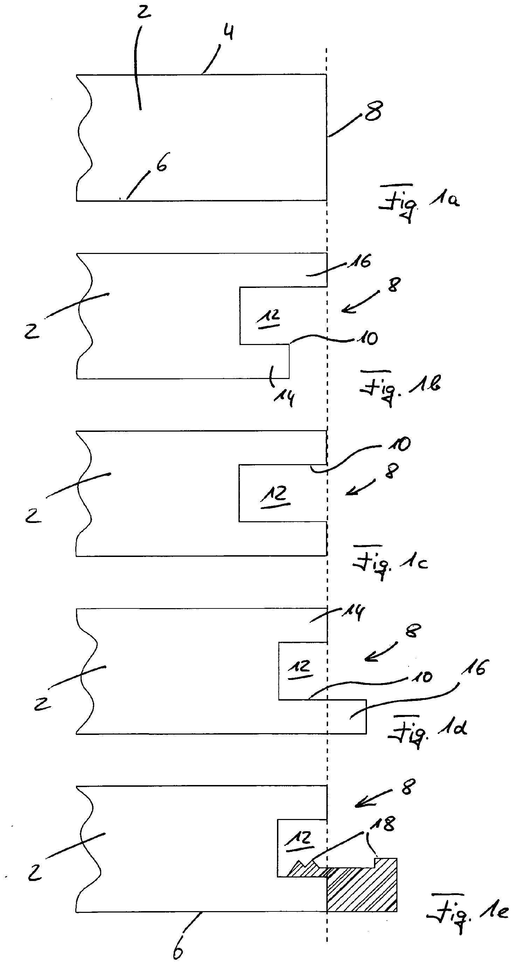

Figur 1a zeigt schematisch einen Teil eines Paneels 2, dass über eine Oberseite 4, eine der Oberseite 4 gegenüberliegende Unterseite 6 und eine Seitenfläche 8 verfügt. Das Paneel 2 kann in seinem Aufbau zwischen Oberseite 4 und Unterseite 6 aus einer Vielzahl unterschiedlicher Schichten unterschiedlicher Materialien und Funktionalitäten bestehen, die der besseren Übersichtlichkeit wegen vorliegend nicht gezeigt sind. Man erkennt in Figur a, dass die Seitenfläche 8 nicht profiliert ist, sondern lediglich durch einen Sägeschnitt erzeugt wurde.

Die Figuren 1b, 1c und 1d zeigen das in Figur 1a gezeigte Paneel 2, nachdem in die Seitenfläche 8 eine Profilierung 10 eingebracht wurde. Die Profilierung 10 ist in allen drei gezeigten Ausführungsbeispielen von einfacher Struktur und kann durch einfachste Fräs- oder Sägewerkzeuge eingebracht werden. In Figur 1c besteht die Profilierung 10 in einer einfachen Nut 12, während in den Figuren 1b und 1d die Nut 12 über einen kurzen Schenkel 14 und einen langen Schenkel 16 verfügt.

Figur 1e zeigt das Paneel 2, in dessen Seitenfläche 8 die Nut 12 eingebracht wurde, nachdem Verriegelungselemente 18 aufgedruckt wurden. Das aufgebrachte Material ist gestrichelt dargestellt, um zu illustrieren, das es sich um ein anderes Material handeln kann, als die Materialien, aus denen die einzelnen Schichten des Paneels 2, wie es in den Figuren 1a bis 1d dargestellt wurde, besteht.
Durch das Aufdrucken können komplizierteste Strukturen und Formen sowie unterschiedliche Materialien realisiert werden.

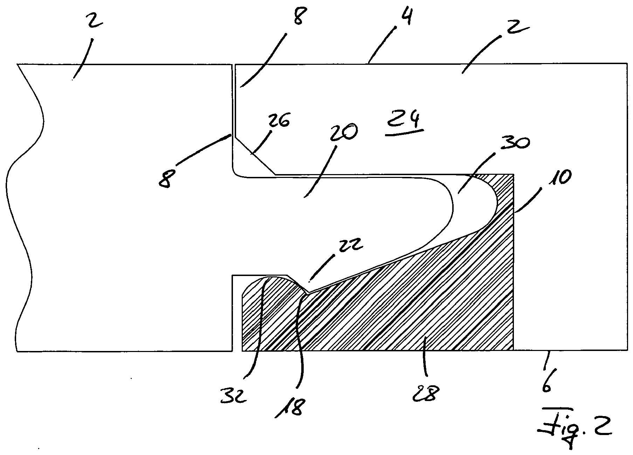

Figur 2 zeigt schematisch einen Ausschnitt aus zwei Paneelen 2, die miteinander verbunden sind. Das linke Paneel 2 verfügt über eine Feder 20, an deren Unterseite, ein Federverriegelungselement 22 angeordnet ist. Die Form der Feder 20 mit dem daran befindlichen Federverriegelungselement 22 ist einfach über Fräs- oder Sägewerkzeuge herstellbar. Daher ist an der Seitenfläche 8 des linken Paneels 2 kein Verriegelungselement mit einem 3D-Drucker aufgedruckt worden. Das rechte Paneel 2 hingegen verfügt über eine Seitenfläche 8, in die zunächst eine Profilierung 10 als Vorprofilierung eingebracht wurde. Dazu wurde im unteren linken Bereich des rechten Paneels 2 ein Bereich entfernt, so dass ein an der Oberseite 4 positionierter Überstand 24 entsteht. Zudem wurde eine Fase 26 erzeugt.

Auch in Figur 2 ist schraffiert das Material 28 dargestellt, das mittels eines 3D-Druckers aufgedruckt wurde. Man erkennt, dass dieses Material 28 eine Verriegelungselement 18 bildet, dass mit dem Federverriegelungselement 22 zusammenwirkt, so dass die beiden Paneele 2 in eine Richtung senkrecht zur Oberseite 4 gegeneinander verriegelt sind. Dies bedeutet, dass eine Bewegung der beiden Paneele 2 relativ zueinander in Figur 2 nach rechts und/oder links nicht mehr möglich ist. Bei dem in Figur 2 gezeigten fertigen Profil handelt es sich um ein Schnappprofil, bei dem das Federverriegelungselement 22 nach dem Einführen der Feder 20 in die gebildete Ausnehmung 30 in das Verriegelungselement 18 schnappt. Dazu muss das Material 28, das über den 3D-Drucker aufgedruckt wurde, eine ausreichende Flexibilität aufweisen, so dass ein Vorsprung 32 durch das Federverriegelungselement 22 nach unten gebogen werden kann.

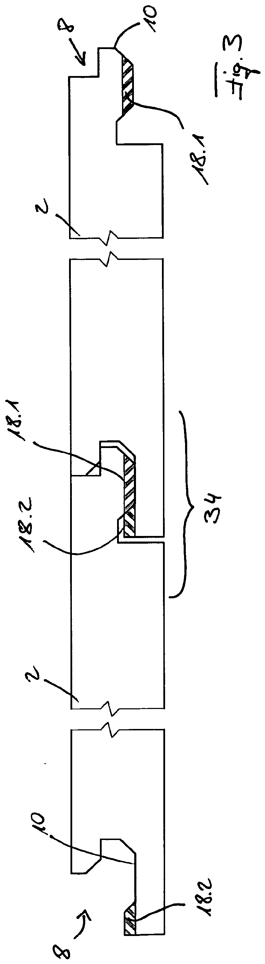

Figur 3 zeigt die schematische Darstellung zwei miteinander verbundener identische Paneele 2, die an ihren beiden gegenüberliegenden Seitenflächen 8 jeweils eine Profilierung 10 aufweisen, die herkömmlicherweise über Fräs- und/oder Sägewerkzeuge hergestellt wird. Die Profilierungen 10 allein sorgen jedoch nicht für eine Verriegelung der beiden Paneele im verbundenen Zustand. Die zwischen den beiden Paneelen 2 erreichte Verbindung 34 ist im mittleren Bereich der Figur 3 gezeigt.

An der jeweils rechten Seitenfläche 8 der beiden Paneele 2 ist mittels des 3D-Druckers ein erstes Verriegelungselement 18.1 angebracht worden. An der gegenüberliegenden zweiten Seitenfläche 8 befindet sich ein zweites Verriegelungselement 18.2, das ebenfalls mittels eines 3D-Druckers aufgedruckt wurde. Die beiden Verriegelungselemente 18.1, 18.2 können aus dem gleichen oder aus unterschiedlichen Materialen bestehen und sorgen, wie im Verbindungsbereich 34 dargestellt ist, für eine Verriegelung der beiden Paneele 2 relativ zueinander.

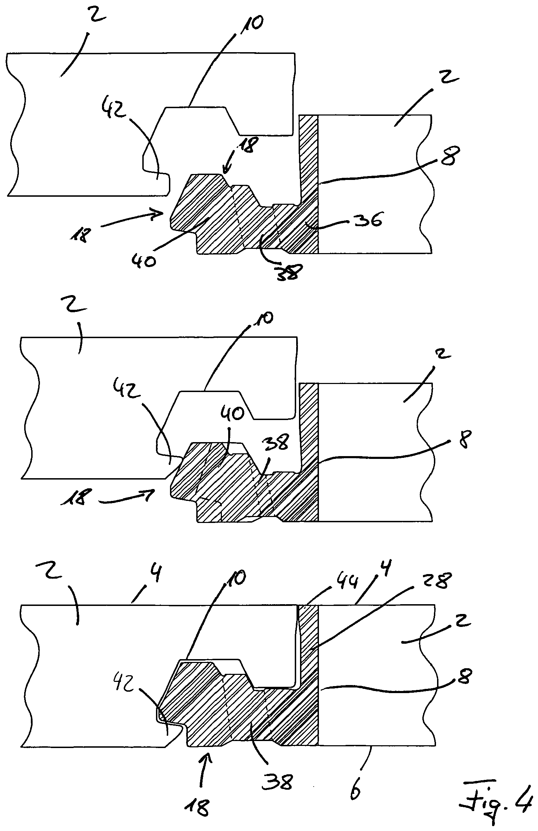

Figur 4 zeigt in den drei Teildarstellungen zwei Paneele 2 in unterschiedlichen Stadien während des Verbindens der beiden Paneele 2. Insbesondere im oberen Teil der Figur 4 ist gut zu erkennen, dass eine Seitenfläche 8 des rechten Paneels 2 keinerlei Profilierung aufweist, während in die Seitenflächen 8 des linken Paneels eine Profilierung 10 eingebracht wurde. An der Seitenkante 8 des in Figur 4 rechts gezeigten Paneels 2 ist mittels des 3D-Druckers ein Verriegelungselement 18 angeordnet, das aus einem ersten Anteil 36 einem zweiten Anteil 38 und einem dritten Anteil 40 besteht. Die Anteile können aus unterschiedlichen Materialien bestehen, wobei im gezeigten Ausführungsbeispiel der erste Anteil 36 und der dritte Anteil 40 aus einem Material und dem zweiten Anteil 38 aus einem anderen Material besteht.

Im in Figur 4 gezeigten Ausführungsbeispiel wird nun das linke Paneel von oben nach unten abgesenkt, um die beiden Paneele miteinander zu verbinden. Dabei trifft eine untere Nase 42 auf das Verriegelungselement 18. Dies ist im mittleren Bereich der Figur 4 dargestellt. Dadurch wird der zweite Anteil 38 gestaucht, so dass der dritte Anteil 40 im Vergleich zum oberen Teil der Figur 4 nach links verschoben wird. Dies ist durch gestrichelte Linien dargestellt. Das Material des zweiten Anteils 38 verfügt im gezeigten Ausführungsbeispiel über eine deutlich größere Elastizität als das Material des ersten Anteils 36 oder des dritten Anteils 40. Auf diese Weise kann sehr einfach und genau vorbestimmt werden, welche Anteile der aufgedruckten Verriegelungselemente 18 wie stark und in welche Richtung gestaucht oder verbogen werden können, um beispielsweise zwei Paneele miteinander zu verbinden.

Im unteren Bereich der Figur 4 ist gezeigt, wie die beiden Paneele im verbundenen Zustand aneinander anliegen. Die Nase 42 schnappt hinter das Verriegelungselement 8, was dazu führt, dass der zweite Anteil 38 sich entspannen und wieder ausdehnen kann. Anstatt ein weiches Material für den zweiten Anteil 38 zu verwenden, könnte stattdessen auch ein Schlitz vorgesehen sein, der im Wesentlichen senkrecht zur Oberseite 4 bzw. Unterseite 6 verläuft, und der Anteil 40 nur an seinen Endbereichen mit dem Anteil 36 verbunden ist.
Man erkennt, das ein Teil 44 des mit dem 3D-Drucker aufgebrachten Materials 28 nicht zu einer Verriegelung führt, wohl aber zwischen den beiden Oberseiten 4 der beiden miteinander verbundenen Paneele 2 sichtbar bleibt. Dies kann zu Dekorationszwecken verwendet werden, um beispielsweise Fugen zwischen nachgebildeten Fliesen und/oder Steinen nachzubilden.

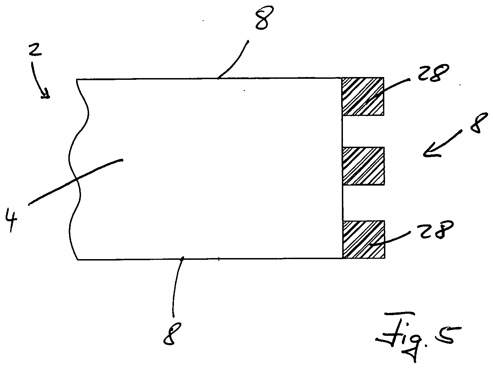

Während im in Figur 4 gezeigten Ausführungsbeispiel das aufgebrachte Material 28 die gesamte Seitenfläche 8 des rechten Paneels 2 abdeckt und so für eine wasserdichte Versiegelung der Seitenfläche 8 sorgt, ist in Figur 5 dargestellt, dass auch eine teilweise Bedruckung der Seitenfläche 8 mit dem Material 28 möglich ist. Dabei zeigt Figur 5 eine schematische Draufsicht auf die Oberseite 4 des Paneels 2, bei der lediglich die in Figur 5 rechte Seitenfläche 8 bedruckt wurde. Je nach gewünschtem Verriegelungselement, der Stärke der benötigten Verriegelung und der Richtung, in der die Verriegelung wirken soll, können unterschiedlichste Verriegelungselemente mit unterschiedlichsten Mengen des Materials 28 auf die Seitenfläche 8 aufgebracht werden. Je weniger Material 8 aufgebracht werden muss, desto stärker wird die Herstellung des Paneels beschleunigt. Gleichzeitig können durch die Materialeinsparung auch die Herstellungskosten reduziert werden.

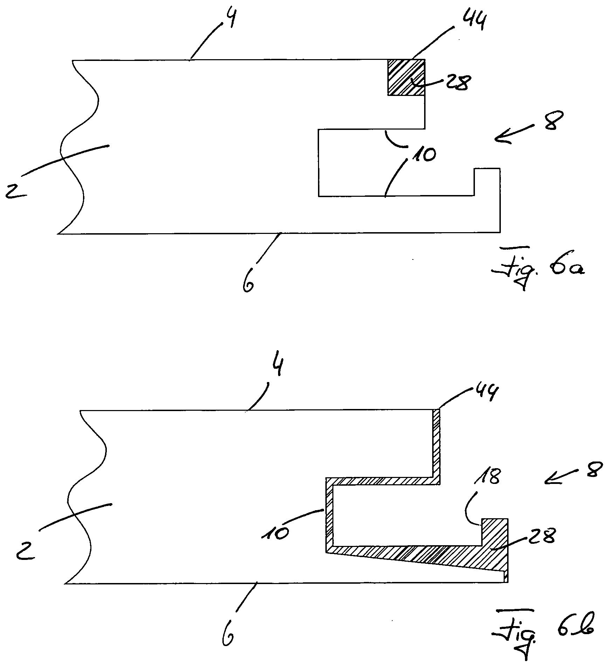

Figur 6a und 6b zeigen weitere Paneele 2. In Figur 6a verfügt das Paneel 2 über eine Oberseite 4 und einer Seitenfläche 8, in die eine Profilierung 10 eingebracht wurde. Man erkennt im Bereich der Oberseite 4 einen Teil 44 des mit dem 3D-Drucker aufgebrachten Materials 28, der keine Verriegelungsfunktion ausübt, sondern lediglich als Dekorelement für die Oberseite 4 gedacht ist. Im in Figur 6b gezeigten Ausführungsbeispiel hingegen, ist die vollständige Seitenfläche 8, in die eine deutliche einfachere Profilierung 10 eingebracht ist, mit Material 28 bedeckt, dass über den 3D-Drucker aufgebracht wurde. Auch hier ist ein Teil 44 des Materials 28 an der Oberseite 4 des Paneels 2 zu erkennen und sorgt für einen gewünschten dekorativen Effekt. Das Material 28 bildet zudem ein Verriegelungselement 18, das in entsprechend korrespondierende Verriegelungselemente eingreifen kann.

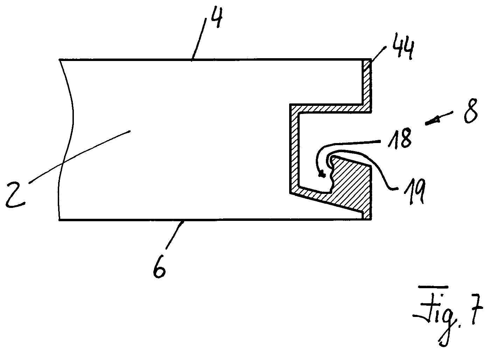

Wie Figur 7 zeigt, können mit dem erfindungsgemäßen Verfahren auch Verriegelungselemente 18 hergestellt werden, die Hinterschneidungen 19 aufweisen, die zur Innenseite des Paneels 2 hin geöffnet sind und mit herkömmlichen Säge- und/oder Fräswerkzeugen nicht hergestellt werden können. Für eine solche komplizierte Profilausbildung müssen die Paneele 2 beim Ausführen des 3D-Druckes aufrecht gestellt werden. Eine solche aufrechte Positionierung des zu bedruckenden Paneels ist bei den anderen gezeigten Ausführungsformen außer den in den Figuren 3 und 6a dargestellten Realisierungen zwar nicht notwendig, jedoch vorteilhaft. Allgemein ist es von Vorteil wenn der zu bedruckende Anteil der Seitenfläche 8 nach oben zeigend ausgerichtet wird. Bei komplizierter ausgebildeter Seitenflächen 8 etwa durch Vorprofilierungen, kann dies dazu führen, dass das Paneel 2 beim Bedrucken oder zwischen zwei Druckvorgängen gedreht wird.

### Bezugszeichenliste

- 2: Paneel
- 4: Oberseite
- 6: Unterseite
- 8: Seitenfläche
- 10: Profilierung
- 12: Nut
- 14: kurzer Schenkel
- 16: langer Schenkel
- 18: Verriegelungselement
- 18.1: erstes Verriegelungselement
- 18.2: zweites Verriegelungselement
- 19: Hinterschneidung
- 20: Feder
- 22: Federverriegelungselement
- 24: Überstand
- 26: Fase
- 28: Material
- 30: Ausnehmung
- 32: Vorsprung
- 34: Verbindung
- 36: erster Anteil
- 38: zweiter Anteil
- 40: dritter Anteil
- 42: Nase
- 44: Teil

## Patentansprüche

1. Verfahren zum Herstellen eines Paneels (2), insbesondere eines Fußbodenpaneels, das eine Oberseite (4), eine der Oberseite (4) gegenüberliegende Unterseite (6) und wenigstens eine Seitenfläche (8), an der wenigstens ein Verriegelungselement (18) angeordnet ist, aufweist, **dadurch gekennzeichnet, dass** das wenigstens eine Verriegelungselement (18) zumindest teilweise mittels eines 3D-Druckers auf der Seitenfläche (8) aufgedruckt wird.

2. Verfahren nach Anspruch 1, **dadurch gekennzeichnet, dass** an wenigstens zwei aneinander gegenüberliegenden Seitenflächen (8) zueinander korrespondierende Verriegelungselemente (18) jeweils wenigstens teilweise mittels eines 3D-Druckers auf der jeweiligen Seitenfläche (8) aufgedruckt werden.

3. Verfahren nach Anspruch 2, **dadurch gekennzeichnet, dass** die zueinander korrespondierenden Verriegelungselemente (18) ausgebildet sind, zwei identische Paneele (2), insbesondere Fußbodenpaneele, miteinander zu verbinden und in wenigstens eine, bevorzugt wenigstens zwei, Raumrichtungen relativ zueinander zu verriegeln.

4. Verfahren nach einem der vorstehenden Ansprüche, **dadurch gekennzeichnet, dass** vordem Aufdrucken eine Profilierung (10) in die Seitenfläche (8) eingebracht wird.

5. Verfahren nach einem der vorstehenden Ansprüche, **dadurch gekennzeichnet, dass** die Profilierung (10) eine Nut (12), eine Feder (20) oder ein modifizierter Falz ist.

6. Verfahren nach einem der vorstehenden Ansprüche, **dadurch gekennzeichnet, dass** zum Aufdrucken des Verriegelungselementes (18) wenigstens ein thermoplastischer Kunststoff und/oder wenigstens ein strahlenhärtbarer Lack verwendet wird.

7. Verfahren nach einem der vorstehenden Ansprüche, **dadurch gekennzeichnet, dass** die Seitenfläche (8) des Paneels (2) mittels des 3D-Druckers wenigstens teilweise entlang wenigstens einer Seitenkante der Seitenfläche (8) bedruckt wird.

8. Verfahren nach einem der vorstehenden Ansprüche, **dadurch gekennzeichnet, dass** ein Teil (44) des mittels des 3D-Druckers aufgedruckten Materials (28) einen Teil der Oberseite (4) des Paneels (2) bildet.

9. Verfahren nach Anspruch 8, **dadurch gekennzeichnet, dass** der Teil (44) des aufgedruckten Materials (28), der den Teil der Oberseite (4) des Paneels (2) bildet, kein Verriegelungselement ist.

10. Verfahren nach einem der vorstehenden Ansprüche, **dadurch gekennzeichnet, dass** das aufgedruckte Verriegelungselement (18) mehrere, insbesondere zwei, unterschiedliche Materialien (28) aufweist, die mit dem 3D-Drucker aufgedruckt werden.

11. Verfahren nach einem der vorstehenden Ansprüche, **dadurch gekennzeichnet, dass** das Paneel mit der durch den 3D-Drucker zu bedruckenden Seitenfläche (8) nach oben angeordnet wird.

12. Verfahren nach einem der vorstehenden Ansprüche, **dadurch gekennzeichnet, dass** massive Anteile der Verriegelungselemente (18) aus einem Material des Paneels hergestellt werden.

13. Paneel (2), insbesondere Fußbodenpaneel, hergestellt nach einem Verfahren gemäß einem der Ansprüche 1 bis 12.

## Claims

1. Method for manufacturing a panel (2), preferably a flooring panel, having an upper side (4), an underside (6) opposite to the upper side (4) and at least one lateral side (8) with at least one interlocking element (18) arranged thereto, **characterized in that** the at least one interlocking element (18) is at least partially imprinted on the lateral side (8) by means of a 3D printer.

2. Method according to claim 1, **characterized in that** on at least two opposing lateral sides (8) corresponding interlocking elements (18) are each at least partially imprinted on the respective lateral side (8) by means of a 3D printer.

3. Method according to claim 2, **characterized in that** the corresponding interlocking elements (18) are designed to join two identical panels (2), preferably flooring panels, and to interlock them in at least one spatial direction, preferably in at least two spatial directions, relative to each other.

4. Method according to one of the preceding claims, **characterized in that** a profiling (10) is introduced into the lateral side (8) before the imprinting.

5. Method according to one of the preceding claims, **characterized in that** the profiling (10) is a groove (12), a tongue (20) or a modified fold.

6. Method according to one of the preceding claims, **characterized in that** at least one thermoplastic polymer and/or at least one radiation curing lacquer is used for the imprinting of the interlocking element (18).

7. Method according to one of the preceding claims, **characterized in that** the lateral side (8) of the panel (2) is at least partially imprinted along at least one lateral edge of the lateral side (8).

8. Method according to one of the preceding claims, **characterized in that** at least a part (44) of the material (28) imprinted by means of a 3D printer forms a part of the upper side (4) of the panel (2).

9. Method according to claim 8, **characterized in that** the part (44) of the imprinted material (28) forming the part of the upper side (4) of the panel (2) is not an interlocking element.

10. Method according to one of the preceding claims, **characterized in that** the imprinted interlocking element (18) comprises various, preferably two, different materials (28), being imprinted by means of the 3D printer.

11. Method according to one of the preceding claims, **characterized in that** the panel is arranged with the lateral side (8) to be imprinted by the 3D printer pointing in an upward direction.

12. Method according to one of the preceding claims, **characterized in that** solid parts of the interlocking elements (18) are manufactured from a material of the panel.

13. Panel (2), preferably flooring panel, manufactured via a method according to one of the claims 1 to 12.

## Revendications

1. Procédé de fabrication d'un panneau (2), en particulier d'un panneau de plancher, qui comprend une face supérieure (4), une face inférieure (6) opposée à la face supérieure (4), et au moins une surface latérale (8) sur laquelle est agencé au moins un élément de verrouillage (18),
**caractérisé en ce que**
ledit au moins un élément de verrouillage (18) est imprimé au moins partiellement par une imprimante 3D sur la surface latérale (8).

2. Procédé selon la revendication 1,
**caractérisé en ce que**
sur au moins deux surfaces latérales (8) opposées l'une à l'autre, des éléments de verrouillage (18) correspondant l'un à l'autre sont imprimés chacun au moins partiellement par une imprimante 3D sur la surface latérale respective (8).

3. Procédé selon la revendication 2,
**caractérisé en ce que**
les éléments de verrouillage (18) correspondant l'un à l'autre sont réalisés pour relier deux panneaux identiques (2), en particulier des panneaux de plancher, l'un à l'autre et pour les verrouiller l'un par rapport à l'autre dans au moins une direction dans l'espace, de préférence dans au moins deux directions dans l'espace.

4. Procédé selon l'une des revendications précédentes,
**caractérisé en ce que**
avant l'impression, un profilage (10) est ménagé dans la surface latérale (8).

5. Procédé selon l'une des revendications précédentes,
**caractérisé en ce que**
le profilage (10) est une rainure (12), une languette (20) ou une feuillure modifiée.

6. Procédé selon l'une des revendications précédentes,
**caractérisé en ce que**
pour imprimer l'élément de verrouillage (18), on utilise au moins une matière synthétique thermoplastique et/ou au moins un vernis durcissable par irradiation.

7. Procédé selon l'une des revendications précédentes,
**caractérisé en ce que**
la surface latérale (8) du panneau (2) est pourvue d'une impression au moyen de l'imprimante 3D au moins partiellement le long d'au moins une arête latérale de la surface latérale (8).

8. Procédé selon l'une des revendications précédentes,
**caractérisé en ce que**
une partie (44) du matériau (28) imprimé au moyen de l'imprimante 3D constitue une partie de la face supérieure (4) du panneau (2).

9. Procédé selon la revendication 8,
**caractérisé en ce que**
la partie (44) du matériau imprimé (28) qui constitue la partie de la face supérieure (4) du panneau (2) n'est pas un élément de verrouillage.

10. Procédé selon l'une des revendications précédentes,
**caractérisé en ce que**
l'élément de verrouillage imprimé (18) comprend plusieurs matériaux différents (28), en particulier deux, qui sont imprimés par l'imprimante 3D.

11. Procédé selon l'une des revendications précédentes,
**caractérisé en ce que**
le panneau est disposé de manière que la surface latérale (8) à pourvoir d'une impression par l'imprimante 3D est tournée vers le haut.

12. Procédé selon l'une des revendications précédentes,
**caractérisé en ce que**
des parties massives des éléments de verrouillage (18) sont réalisées à partir d'un matériau du panneau.

13. Panneau (2), en particulier panneau de plancher, fabriqué par un procédé selon l'une des revendications 1 à 12.
